# EUROPEAN PATENT APPLICATION

(11) **EP 4 738 034 A1**
(43) Date of publication of application: **06.05.2026**
(21) Application number: 24210309.1
(22) Date of filing: 31.10.2024
(51) Int. Cl.: G05B 19/418, G06Q 10/0631, G06Q 50/04

(54) **DEVICE FOR OPTIMIZING ENVIRONMENTAL CONSUMPTION**

(71) Applicant: Bühler AG, 9240 Uzwil (CH)
(72) Inventor: O'NIEN, Jay, 9000 St. Gallen (CH); MANZOLINI, Giulia, 8005 Zurich (CH); KEATING, Leon, Bishopstown, Cork, T12 YE1N (IE); DIK, Hendrik, 5400 Baden (CH)
(74) Representative: Leimgruber, Fabian Alfred Rupert

(57) **Abstract**

Proposed a device for optimizing environmental consumption used by a production cycle of a production line and/or an industrial site for processing or manufacturing one or more products by said production cycle, the production line comprising one or more processing units interlinked to provide the production cycle, and the device comprising an input section with measuring devices and sensors capturing measuring parameters at the processing units, data transmission lines/networks to communicate the measured parameters from the measuring devices and sensors to the device.

## Description

### Field of the Invention

The present invention relates in general to a device for optimizing environmental consumption used by a production cycle of a production line and/or an industrial site for processing or manufacturing one or more products by said production cycle, the production line, that improve environmental consumption efficiency and are applicable in technical areas ( e.g. production processes), manufacturing industry (e.g. factories, plants, process lines), and tertiary areas ( e.g., buildings, transportation, etc.) for which it is desirable to reduce environmental consumption for example at least one of energy supply cost, CO₂ (carbon dioxide) emission and primary energy consumption. Further, it relates to measuring and forecasting systems directed to the measurement and/or forecasting of environmental consumption quantification measures and environmental savings.

### Background of the Invention

Industrial sites, when built and operated with sustainability in mind, can contribute positively to the environment. During the construction phase, employing responsible land use planning can help minimize habitat disruption and support biodiversity. Utilizing sustainable materials such as recycled steel and eco-friendly concrete reduces resource depletion and lowers greenhouse gas emissions. Energy-efficient construction practices and machinery contribute to a significant reduction in CO2 emissions and reliance on nonrenewable energy sources. Additionally, adopting water-saving techniques can mitigate the impact on local water resources, while strategies like repurposing construction waste can minimize landfill burden and promote recycling. Advanced dust suppression and noise reduction technologies safeguard air quality and community well-being, and careful handling of fuels and chemicals prevents soil contamination, protecting local ecosystems. Once the industrial site is operational, there are further opportunities for positive environmental impacts. Employing renewable energy sources and sophisticated energy management systems can significantly cut down greenhouse gas emissions, combating climate change. Efficient water usage practices help mitigate local water scarcity and pollution. Responsible sourcing of raw materials/input materials preserves biodiversity and reduces ecological impacts, while using safer chemicals and proper handling routines prevent soil and water contamination, protecting both human health and the environment. Effective waste management and recycling programs reduce landfill usage and support ecosystem health. Advanced filtration and emission control technologies improve air quality by reducing pollutants and noise control measures positively impact local communities and wildlife. Reducing transportation emissions through logistic efficiencies and greener fuels lowers the overall environmental footprint of food production. In the context of food and feed production, specific practices can make a substantial difference. Optimizing food production processes, such as milling and processing wheat, conserves critical resources by using less energy and water. Implementing energy-efficient technologies and using renewable energy sources can significantly lower CO2 emissions. Enhancing the use of by-products like bran and germ minimizes waste and optimizes resource use, while using recyclable and biodegradable packaging materials greatly reduces plastic waste and its impact on oceans and marine life. Adopting sustainable agricultural practices and shifting towards plant-based diets can further lower the environmental impact of food production. By adopting these sustainable practices, the environmental impacts of constructing and operating industrial sites can be significantly mitigated. Implementing renewable energy, efficient water management, safer chemical use, and effective waste management strategies not only reduce harmful impacts but also contribute to a healthier planet. Transitioning to more sustainable food production and consumption patterns can reduce food-related greenhouse gas emissions by up to70%, highlighting the substantial benefits of these changes. Through careful planning and responsible management, industrial sites can become environmentally friendly establishments that support ecological balance and community health. In this context, it is a known fact that feed and food production contribute substantially to the environmental consumption for example emissions of greenhouse gases, which are known to cause said global warming with serious environmental and economic threads. Industrial food and feed production processes, raw material processing and linked manufacturing operations are energy intensive where also used electricity is often generated by fossil fuels which are a major contributor of CO2 emissions. Furthermore, these processes consume a high amount of water for washing, cooking, and cleaning processes that can lead to local water shortages. And furthermore such processing lines process large quantities of agricultural and/or animal products possibly resulting in deforestation and habitat loss by land clearing for agriculture leads to habitat destruction and loss of biodiversity, resource depletion by overharvesting of agricultural produce can exhaust soil nutrients and degradable and quality and waste generation by packaging materials often end up in landfills or oceans, contributing to pollution and harming wildlife. The environmental consumption of a food processing line spans energy, water, raw materials, chemicals, and waste, each of which has significant environmental impacts. High-energy usage contributes to greenhouse gas emissions, driving climate change.

Intensive water usage can lead to local water scarcity and pollution. The consumption of raw materials often results in biodiversity loss and resource depletion. Chemical usage poses risks of contamination and health hazards. Lastly, waste generation strains landfill capacities and harms ecosystems. Addressing these environmental consumption impacts requires robust energy management systems, efficient water use practices, sustainable sourcing of raw materials, safer chemicals and effective waste management strategies.

Many factors influences on energy requirements for the raw material transformation of wheat. Measuring parameters in the transformation of raw wheat in a food production line that impact the environmental consumption of the produced end product includes energy usage, water usage, and waste generation. Energy usage encompasses the electricity and fuel required for milling, mixing, and baking processes. Water usage pertains to the amount of water consumed throughout the cleaning, tempering, and processing stages. Waste generation involves the by-products and residues created during milling and production, such as bran and germ waste. Another critical parameter is the emission levels from machinery used in production, which contribute to greenhouse gases. The efficiency of resource utilization, including the proportion of wheat transformed into the final product versus that lost as waste, also plays a significant role. Packaging processes further impact environmental consumption through the type and recyclability of packaging materials used. Additionally, transportation emissions from transporting raw wheat to the production facility and distributing the final product to markets are substantial contributors. Finally, the environmental footprint is influenced by the methods employed for waste disposal, whether it's landfill, incineration, or recycling, and the overall sustainability practices of the production line, including the use of renewable energy sources and implementation of energy-saving technologies. Feed and food production contribute substantially to environmental consumption. The energy consumption of food production, including wheat transformation, typically consumes significant energy, for example. For instance, the milling process alone can require 50-70 kWh per ton of wheat. Furthermore agricultural production of wheat demands extensive water usage, with estimates indicating around 1,800 liters of water are needed to grow 1 kilogram of wheat. Processing this wheat into food products also adds to the water footprint, with milling consuming about 1-2 liters per kilogram of grain. Greenhouse Gas Emissions: feed and food production account for substantial CO2 emissions. For example, wheat production emits approximately 0.4 kg CO2 per kilogram of grain, and further processing into products like bread or pasta increases this footprint significantly. And furthermore the food production industry generates notable waste. For instance, during the milling process, 25-30% of the wheat mass can become bran and germ by-products, which if not utilized effectively, contribute to waste. In contrast, the efficiency of resource utilization varies. The feed conversion ratio (FCR) in livestock production can be high, with chicken requiring an FCR of around 1.6, whereas cattle can require an FCR of over 6, thereby indicating more resource consumption for meat production than for plant-based food products. For example, the water footprint of plant-based food production generally has a lower water footprint compared to animal-based food production. For example, producing 1 kg of beef can require up to 15,000 liters of water, whereas producing 1 kg of wheat requires around 1,800 liters. Packaging contributes also notably to environmental impact. Food packaging generates substantial plastic waste. A comparative study showed that plastic packaging waste from food production can constitute over 60% of total packaging waste in some regions. These examples underscore the significant environmental impact of feed and food production while highlighting are as for improvement and potential benefits of more sustainable practices. By taking steps to mitigate these environmental factors, such as using renewable energy, implementing efficient water management, adopting waste reduction practices, and ensuring proper regulatory compliance, the environmental impacts of constructing and operating an industrial site can be significantly reduced. By implementing sustainable practices, such as using renewable energy, managing water resources efficiently, reducing waste, and adhering to environmental regulations, the environmental impacts of constructing and operating an industrial site can be considerably mitigated. Thus, systems, providing an efficient energy management should be able the take into account, the correlation between energy consumption and the class of wheat, moisture content, feed rate, fast rolls peed, roll speed differential and roll gap. Further, since wheat flour relies on proper conditioning to facilitate endosperm and bran separation, many mills add moisture to soften the grain improving efficiency in terms of the energy required to produce the flour. It is clear, that processing of natural resources depends on their composition, Therefore, it is important to an energy management system should be enabled to consider the relationship between energy efficiency and the properties of the raw material. The physical properties of wheat and technical exploitation parameters of grinding rolls have a direct influence on energy consumption of grinding as well. However, most prior art systems controlling the plant processes focus in the effect on product quality instead of the energy consumption. Thus, these systems typically consider the effects of normal and hard milling and different conditioning times on flour properties of wheat were studied, without considering the energy consumption.

The prior art document US 2011/0144791 A1 shows a system for control, monitoring and recording of incoming chemical and power use, and emissions of electronic device manufacturing systems. According to US 2011/0144791 A1, the system is focused on so called sub-fab equipment which shall typically do not have monitoring data for energy consumption and/or energy savings. The sub-fab equipment, as defined by US 2011/0144791 A1, can comprise auxiliary devices as abatement tools, AC power distributors, primary vacuum pumps, spare vacuum pumps, water pumps, chillers, heat exchangers, process cooling water supplies and delivery systems, electrical power supplies and delivery systems, inert gas dumps, valves, device controllers, clean dry air supplies and delivery systems, ambient air supplies and delivery systems, inert gas supplies and delivery systems, fuel supplies and delivery systems, touch screens, process logic controllers, reagent supplies and delivery systems, etc. Thus, US 2011/0144791 Al proposed that the energy usage of sub-fab equipment is monitored by integrated sub-fab systems. By integrated sub-fab systems, the system is able to capture different depths of energy savings modes such as idle (shallow energy savings where production equipment can recover to normal production with no quality or throughput impact in seconds.), sleep (deeper energy savings where production equipment can recover in minutes), or ibernate (where production equipment may require hours to recover not to have impact on quality or throughput). The system is also able to monitor and display all gas emissions in a sub-fab as well as the Semi S23 method reporting of CO2 equivalent emission. The system can monitor effluent process gases and energy use from a certain process tool and sub-fab equipment. Therefore, in principle, the system of US 2011/0144791 Al proposes distinct measurements and monitoring at the different subfab equipment, to capture or measure the overall monitoring and recording of incoming chemical and power use of the complete fab-system.

The prior art document EP 4 120 158 A1 shows a system for a control system and method providing automated optimization of energy management and/or minimization of the overall energy consumption in production processes of plants or industrial sites. Thus EP 4 120 158 A1 proposes a control device that uses sensors and measuring devices to capture various parameters related to processing units and the environment, transferring data to optimize energy management and CO2 quantification. The system aims to provide CO2 evaluation, prediction, and optimization with automated and optimized energy management, wherein constructional parameter values represent structural characteristics of the industrial site, and based on monitored measuring parameters, a product CO2-e quantification measure value is generated measuring a CO2-e intensity of a product processed or manufactured by the industrial site and/or an industrial site CO2-e quantification measure value is generated measuring a quantified CO2-e footprint of the industrial site. The inventive system is enabled to provide CO2 evaluation measurements/prediction/optimization with or without automated and/or optimized energy management.

### Summary of the Invention

The scope of the invention is defined in the independent claims.

It is an object of the present invention to provide a device and method providing automated optimization of environmental consumption management and/or minimization of the over all environmental consumption in production processes of processing lines and/or industrial sites. It is an object of the present invention to provide a device and method for an intelligent system with all the data required that enables automated environmental consumption quantification measuring and forecasting. Further, the system should be easy scalable and operatable with all kinds of third-parties' competitor/partner equipment. The system should be able to automatically collect relevant data and process the data to generate site environmental consumptions and/or product environmental consumptions. It should further be able to automatically, or at least semi-automatically provides improvement measures, considering and reconfiguration of the process and/or the site and/or the processing units, production or manufacturing measures and impact parameters against each other. According to the present invention, these objects are achieved, particularly, by the features of the independent claims. In addition, further advantageous embodiments can be derived from the dependent claims and related descriptions.

According to the present invention, these objects are achieved, particularly, by the features of the independent claim. In addition, further advantageous embodiments can be derived from the dependent claims and related descriptions.

According to the present invention, the above-mentioned objects related to optimizing environmental consumption measurement and forecasting of a environmental consumption and forecasted environmental-savings of an industrial site and/or of a product manufactured or processed by said industrial site by means of a control device are achieved, particularly, in that the a device for optimizing environmental consumption used by a production cycle of a production line and/or an industrial site for processing or manufacturing one or more products by said production cycle, the production line comprising one or more processing units interlinked to provide the production cycle, and the device comprising an input section with measuring devices and sensors capturing measuring parameters at the processing units, data transmission lines/networks to communicate the measured parameters from the measuring devices and sensors to the device , characterized, in that the device comprises a determining module configured to measure environmental consumption parameter values of the production cycle via the input section, the environmental consumption parameter values indicating the environmental consumption used by the production cycle for manufacturing or processing the product, in that the determining module is further configured to capture re-configuration parameters for re-configuring the production cycle to a re-configured production cycle via the input section, the re-configured production cycle used for manufacturing or processing one or more second products, and the reconfiguration parameters denoting one or more processing units and/or one or more structural elements and/or one or more input materials to be replaced and/or adjusted and/or added to the production line for manufacturing or processing the one or more second products, in that the determining module is configured to forecast (i) second environmental consumption parameter values of the re-configured production cycle for manufacturing or processing the second product and(ii) re-configuration environmental consumption parameter values indicating the environmental consumption used for the reconfiguration of the production cycle to the re-configured production cycle based on the re-configuration parameter values, in that the determining module is configured to generate a time-dependent saving parameter value, the time-dependent saving parameter value measuring the cumulated environmental-consumption given by the totaled second environmental consumption parameter values used by the re-configured production cycle and summed up by the totaled reconfiguration environmental consumption parameter values, and subtracted by the environmental consumption parameter values of the production cycle, thereby indicating the environmental savings of the re-configuration production cycle for manufacturing or processing the second product compared to the production cycle for manufacturing or processing the product over time, and in that the determining module is configured to trigger a first control signal if the time-dependent environmental-saving parameter value becomes zero or negative indicating the point in time, where the environmental savings achieved by re-configuring the production cycle to the re-configured production cycle becomes positive, so that device is enabled to provide an environmental evaluation and/or comparison measurement/forecast/optimization with or without automated and/or optimized reconfiguration management of the product cycle. In particular the device is enabled to capture and/measuring the reconfiguration of the production cycleand measures and/or forecasts the environmental consumption of a processing line and the manufactured or processed input materials of a production cycleand a reconfigured production cyclefor generating an environmental saving parameter value.

In another embodiment variant the input section is configured to capture one or more third products, in that the determining module is configured to forecast third environmental consumption parameter values of the production or manufacturing of the one or more third products, the third environmental consumption parameter values indicating the environmental consumption used for the production or manufacturing of the one or more third products, in that the determining module is configured to generate a time-dependent second saving parameter value, the time-dependent second saving parameter value measuring the cumulated environmental-consumption given by the totaled second environmental consumption parameter values used by the re-configured production cycle and summed up by the totaled re-configuration environmental consumption parameter values, and subtracted by the third environmental consumption parameter values of the one or more third products, thereby indicating the environmental savings of the re-configuration production cycle for manufacturing or processing the second product compared to the one or more third products overtime, and in that the determining module is configured to trigger a second control signal if the time dependent second environmental-saving parameter value becomes zero or negative indicating the point in time, where the environmental savings achieved by the re-configured production cycle becomes positive, so that the device is enable to forecast a environmental consumption of the third product and to compare the environmental consumption of the third product with environmental consumption of the second product. In an embodiment variant, the third product is an alternative product to the second product, wherein term "alternative" shall mean a product comprising similar characteristics important to the end consumer of the second product. The second product being a plant-based chicken alternative compared with a chicken breast produced by conventional methods, for example. The device is enabled to compare and/or optimize the environmental consumption of the second product based the third product, for example.

In a further embodiment variant, the environmental consumption parameters denoting an energy consumption parameter and/or a CO2 emission parameter and/or a water consumption parameter and/or a land consumption parameter and/or a material consumption parameter and/or a capital consumption parameter and/or a biodiversity consumption parameter, so that the device is enabled to take in consideration a part or all environmental variables impacting the manufacturing or processing of the product, second product and/or third product for the forecasting/measuring/capturing the environmental consumption and to generate the environmental saving parameter values. By continuously monitoring these factors, the device enables real-time adjustments to HVAC systems, lighting, and other energy-consuming equipment, leading to improved energy efficiency and reduced waste. This data-driven approach allows for precise control of environmental conditions, ensuring optimal comfort for occupants while minimizing unnecessary energy usage. The device's ability to detect air quality issues and CO2 levels can trigger ventilation systems when needed, improving indoor air quality and occupant health without overusing resources, for example. By providing detailed insights into energy consumption patterns, the device helps identify areas of inefficiency and opportunities for improvement, potentially leading to substantial cost savings and reduced carbon footprint. The continuous monitoring also enables predictive maintenance, preventing equipment failures and extending the lifespan of systems, which further contributes to resource conservation. Additionally, the device's data can be used to demonstrate compliance with environmental regulations and sustainability goals, potentially enhancing the organization's reputation and stakeholder relations. Overall, such a device serves as a powerful tool for optimizing environmental consumption, promoting sustainability, and achieving a balance between efficiency and environmental responsibility.

In an embodiment variant, the device comprises a repository, the repository comprising ahistorical environmental consumption data and/or an emission repository and/or a recipe data and data transmission lines/networks to transfer and handle data recorded in the repository between the repository and the control device via the input section, so that the device is enabled to access and take in consideration data that contribute significantly to evaluating and forecasting the environmental impact of the processing line and/or the industrial site. By comprising multiple emission records linked to various inputs such as input materials, products, structural elements, and processing units, the repository provides a comprehensive overview of the environmental footprint of the entire production process. This thorough mapping ensures that a holistic assessment of the production cycle regarding its environmental impact. Each emission record comprises specific intensities such as energy consumption, CO2 equivalent (CO2e) emissions, land use, water use and biodiversity impact. By quantifying these parameters, it delivers precise metrics that ensure a precious forecast of the magnitude of environmental impact associated with each component of production. The repository records the intensities per unit of processed material or manufactured product, or per financial investment for re-configuration of the production cycle, production line, or industrial site. This level of granularity enables targeted assessments and optimizations. For instance, it can highlight whether a particular material or product significantly drives up energy usage or CO2 emissions. Furthermore, detailed emission records available, stakeholders can make more informed decisions regarding material choices, production methods and investment in new technologies. They can identify areas where environmental savings are most feasible and prioritize actions that will yield the highest benefit in terms of reducing consumption and emissions. And furthermore, by regularly updating the emission repository with new data, companies can continuously monitor their performance and identify trends. This ongoing process facilitates continuous improvement in environmental optimization of the process line and/or industrial site.

In a further embodiment variant, the emission repository comprising at least one emission record, wherein each emission record is related to one of the input materials or to one of the products or to one of the structural elements or to one of the processing units, and in that each emission record denotes an energy consumption intensity and/or a CO2e intensity and/or a land use intensity and/or a water use intensity and/or a biodiversity use intensity (i) per unit of processed material or manufactured product or (ii) per financial investment for the re-configuration of the production cycle and/or production line and/or the industrial site, so that the device is enabled to precisely quantify the contribution of each material to the overall environmental impact. This enables accurate forecasting of metrics like energy consumption, CO2 emissions, land use, water use, and biodiversity impact based on the actual composition of the product.

In a further embodiment variant, the recipe data comprising at least one recipe for manufacturing or processing the one or more first products (or the one or more second product or the third product, and in that the recipe denotes a recipe ID and/or one or more recipe input materials each with a weight portion for quantifying the share of the recipe material of the corresponding product, so that the environmental optimization of the second product manufactured or processed by the reconfigured production cycle includes several significant benefits for manufacturing and processing operations of the reconfigured production process. By integrating recipe information, the device is enabled to accurately calculate and optimize resource consumption, resulting in improved energy efficiency and reduced waste. The recipe information enables to fine-tuned adjustments in the reconfigured production cycle and/or re-configuration of the product cycle, ensuring that only the necessary amounts of input materials are used, which can result in substantial cost savings and a reduced environmental footprint. The device is also enable by the use this recipe to forecast/predict and prevent potential equipment failures by monitoring how different recipes and input material combinations affect the reconfigured production cycle performance over time. With detailed recipe information, the system can automatically adjust environmental parameters such as temperature, humidity, and air quality to create optimal conditions for the one or more second product, enhancing product quality and consistency. The ability to track and analyze recipe-specific data enables better compliance with environmental regulations and quality standards, as well as production line and/or industrial is enabled to accurate reporting and documentation. Furthermore, this precise recipe tracking can lead to improved inventory management and supply chain optimization, reducing overproduction and minimizing storage requirements. The device's capacity to correlate recipe data with energy consumption patterns can help identify the most energy-intensive second products or processes, allowing for targeted efficiency improvements. Lastly, by maintaining a database of recipe IDs and their associated environmental impacts, the system can support data-driven decision-making for product development and process optimization, ultimately contributing to a more sustainable and efficient manufacturing operation.

In an embodiment variant, the re-configured production cycle manufactures or processes the one or more second products during a production cycle period, and in that the determining module is further configured to capture planning parameters, each planning parameter denoting a product volume parameter for planning a number of units of the one or more second products being manufactured or processed by the re-configured production cycle and/or a financial investment parameter for defining the financial investment used for the reconfiguration of the production cycle to the re-configured production cycle, so that by defining the number of processing units for various products, it becomes easier to forecast production outputs accurately and ensures an aligned production schedules, ensuring that product requirements are met without overproducing or underproducing.

In a further embodiment variant, the entire or a part of a production cycle period is divided into several first-time intervals, so that the device is enabled to allocate resources, such as input material, processing units and volumes a part or the entire production for the measurement/forecasting of the environmental consumption of the first product and/or second product and/or third product. Furthermore identifying cost-saving opportunities and optimizing financial expenditures in relation of the environmental consumption is ensured. the product volume parameter is time-dependent and is denoting a production volume value of the manufactured or processed one or more second products by the reconfigured production cycle for each of the first time intervals, so that more efficient use of input materials, processing units, and production volumes, reducing waste and optimizing resource consumption. By breaking down the production cycle into smaller intervals, the device is enabled to make real-time adjustments to resource allocation based on actual needs and production volumes, preventing overuse or underutilization of resources. This granular approach to resource management enables better tracking of environmental consumption for each of the products, facilitating more accurate sustainability reporting and decision-making. The time-dependent product volume parameter provides valuable insights into production patterns, enabling better forecasting and planning of resource needs across different time intervals. This data-driven approach helps identify inefficiencies and bottlenecks in the (re-configured) production cycle, leading to targeted improvements and optimizations. By forecasting environmental consumption at each stage of production cycle, the system can identify cost-saving opportunities related to energy usage, water consumption, and waste reduction. The ability to reconfigure the production cycle based on real-time data and forecasts enables more agile and responsive production cycle, potentially leading to improved product quality and reduced environmental impact. This detailed level of forecasting supports continuous improvement, enabling the device to iteratively refine the reconfigured production cycle for maximum efficiency and minimal environmental footprint. The reconfigured production cycle's capacity to allocate resources and measure consumption for the one or more products enables more accurate cost attribution and profitability analysis, helping businesses make informed decisions about second product recipe and pricing strategies. Ultimately, this approach fosters a culture of sustainability within the organization, aligning reconfigured production cycle with environmental goals.

In an embodiment variant, the entire or part of production cycle period is divided into several second time intervals, and the financial investment parameter is time-dependent and is denoting an investment amount value for each of the second time intervals indicating the financial investment for re-configuring the production cycle to the re-configured production cycle, so that ensuring a precise allocation of resources and better alignment of investments with production needs over time. By breaking down the production cycle, in particular the reconfigured production cycle,, enabling targeted investments at specific intervals, enabling more efficient use of capital and potentially reducing overall costs. This granular approach to financial planning allows for better cash flow management, as investments can be timed to coincide with periods of higher revenue or lower operational expenses. The time-dependent investment parameter provides flexibility to adapt to changing market conditions or production requirements, allowing for dynamic reconfiguration of the production cycle as needed.

In a further embodiment variant, the first time-interval (and the second time interval comprise an identical duration of time, so that direct comparisons between resource allocation and financial investment periods. This alignment enables better correlation between production metrics and financial inputs, leading to more accurate insights into the relationship between investments and production outcomes. The identical time intervals facilitate easier identification of patterns and trends in both resource consumption and financial expenditures, potentially revealing cyclical behaviors or dependencies that might otherwise be obscured by varying time scales. This approach enable the device for a precise forecasting and planning, as the consistent time frames allow for better extrapolation of future needs based on historical data. The uniform intervals enable more effective performance benchmarking across different production cycles or between different products, as the time factor remains constant. From a financial perspective, having matching intervals for production and investment analysis allows for more accurate assessment of return on investment (ROI) and other financial metrics. The consistent time frames simplify the implementation and maintenance of automated monitoring and control systems, as they can be programmed with a single, uniform time interval..

In an embodiment variant, the device comprises a predictive device configured (i) to retrieve from the related recipe data stored in the repository for each of the one or more products manufactured or produced by the production cycleand/or the corresponding recipe of the one or more second products with the corresponding one or more recipe input materials and the corresponding weight portions, and the predictive device is configured to retrieve for each retrieved recipe input material and/or for each processing unit of the production cycleand/or the processing units and/or input material replaced or adjusted or added the corresponding emission record, so that detailed recipe data and corresponding input materials is retrieved, allowing for more precise allocation and utilization of resources. This leads to reduced waste and improved efficiency in the reconfigured production cycle. The ability to access weight portions for each recipe input material enables more accurate forecasting of material needs, potentially optimizing inventory management and reducing storage costs. By retrieving emission records for each input material and processing unit, the device facilitates better environmental impact assessment and compliance with emissions regulations. This data-driven approach allows for more informed decision-making when adjusting or replacing processing units or input materials to reduce environmental impact. The predictive capabilities of the device is enabled to identify potential bottlenecks or inefficiencies in the reconfigured production cycle, enabling proactive optimization of processes. By analyzing the relationship between recipe input materials, weight portions, and emissions, the device is enabled to generate modifications to recipes and/or reconfigured production cycle that ensure product quality while reducing environmental impact. The comprehensive data retrieval and analysis capabilities ensures continuous improvement initiatives, enabling the device to iteratively refine reconfigured production cycle for maximum efficiency and minimal environmental footprint. The device's ability to forecast changes in input materials or processing units and their corresponding emission records enables more accurate reporting and documentation for regulatory compliance and sustainability initiatives. By providing a holistic view of the reconfigured production cycle, including recipes, input materials, and emissions, the device supports better integration between different production lines and/or industrial sites such as production, quality control, and environmental management.

In a further embodiment variant, the predictive device is configured to generate time-dependent second environmental consumption parameter values, the generated time-dependent second environmental consumption parameter values forecasting the totaled environmental consumption of the manufacturing or processing of the one or more second products for each of the first time intervals based on the corresponding emission records of (i) the recipe input materials with the corresponding weight portion of the recipe of each of the one or more second products and/or the processing units of the production cycle and (ii) the processing units and/or input materials being replaced and/or adjusted and/or added to the production line for manufacturing or processing the one or more second products and (iii) the time dependent product volume parameter values of the reconfigured production cycle, so that an high precision is ensured in environmental impact forecasting is achieved by considering multiple factors, including recipe input materials, weight portions, processing units, and production volumes. This comprehensive approach allows for more accurate predictions of environmental consumption for second products. Further optimization of the re-configured production cycle is facilitated by correlating environmental consumption forecasts with specific recipe components and production volumes. This enables the device to fine-tune the reconfiguration of the production cycle, potentially reducing environmental impact while maintaining or improving product quality of the second product. Furthermore, This granular approach allows for dynamic adjustments to resource allocation, potentially reducing waste and operational costs associated with second product manufacturing and an improved reconfiguration of the production cycleis enabled by the ability to forecast environmental impacts of changes in input materials, processing units, or production volumes. This can inform choices about which modifications to implement based on their predicted environmental footprint.

In an embodiment variant, the predictive device is configured to generate time-dependent reconfiguration environmental consumption parameter values, the time-dependent re-configuration environmental consumption parameter values forecasting the totaled environmental consumption for each second time interval used by the reconfiguration of the production cycle based on the emission records of the processing units and/or structural elements being replaced and/or adjusted and/or added to the production line for manufacturing or processing the one or more second products and the time dependent financial investment parameter values, so that the device is enabled to accurate forecasting of environmental impacts associated with the reconfiguration of the production cycle, resulting in precious planning and optimization of environmental resource use. Furthermore, the device is enabled to forecast totaled environmental consumption for each second time interval providing granular insights into the ecological footprint of the reconfiguration of the production cycle and to the reduction of the overall environmental impact. The use of emission records of processing units and structural elements being modified/replaced/adjusted in the production cycle ensures a more comprehensive assessment of the environmental consequences of reconfiguration, supporting more sustainable manufacturing or processing of the one or more second products. A correlation of environmental consumption forecasts with time-dependent financial investment parameter values enables a holistic view of the cost-benefit relationship between environmental improvements and financial investments, resulting in a more balanced and sustainable reconfigured production cycle.

In a further embodiment variant, the predictive device configured to retrieve for each of the manufactured or produced one or more third products the corresponding emission record, and the predictive device is configured to generate time-dependent third environmental consumption parameter values, the time-dependent third environmental consumption parameter values forecasting the totaled environmental consumption of the manufacturing or processing of the one or more third products for each of the first time intervals based on retrieved emission records for each of the one or more third products and the time-dependent product volume parameter values of there-configurated production cycle, so that the device is enabled to forecast the total environmental impact associated with manufacturing or processing of the one or more third products. The ability to forecast environmental consumption for each first time interval provides granular insights into the ecological footprint of production, enabling more precise monitoring and control of environmental impacts over time.

In an embodiment variant the one or more third products are alternative products to the one or more second products, so that a comparison of the environmental impact are comparable to each another, so that the device is enabled to optimize the reconfiguration of the production cycle by the comprehensive environmental impact data provided by the predictive device of the second and the third product. This can inform choices about which reconfiguration of the production cycleto prioritize or phase out based on their environmental footprint, supporting long-term sustainability goals.

According to an aspect of the invention provided a method for optimizing environmental consumption used by a production cycle of a production line and/or an industrial site for processing or manufacturing one or more products by said production cycle, the production line comprising one or more processing units interlinked to provide the production cycle, and the device comprising an input section with measuring devices and sensors capturing measuring parameters at the processing units, data transmission lines/networks to communicate the measured parameters from the measuring devices and sensors to the device, characterized, in measuring environmental consumption parameter values of the production cycle via the input section, the environmental consumption parameter values indicating the environmental consumption used by the production cycle for manufacturing or processing the product, in capturing re-configuration parameters for reconfiguring the production cycle to a re-configured production cycle via the input section, the reconfigured production cycle used for manufacturing or processing one or more second products, in forecasting second environmental consumption parameter values of the re-configured production cycle for manufacturing or processing the second product, in forecasting re-configuration energy consumption parameter values indicating the environmental consumption used for the reconfiguration of the production cycle to the re-configured production cycle based on the reconfiguration parameter values, in generating a time-dependent saving parameter value by (i)measuring the cumulated environmental-consumption given by the totaled second environmental consumption parameter values used by the re-configured production cycle, (ii) summing up the totaled re-configuration environmental consumption parameter values, and (iii) subtracting the environmental consumption parameter values of the production cycle, thereby indicating the environmental savings of the re-configuration production cycle for manufacturing or processing the second product compared to the production cycle for manufacturing or processing the product overtime, and in triggering a first control signal if the time-dependent saving parameter value becomes zero or negative indicating the point in time, where the environmental savings achieved byre-configuring the production cycle to the re-configured production cycle becomes positive.

### Brief Description of the Drawings

The present invention will be explained in more detail by way of example in reference to the drawings in which:
Figure 1 shows a block diagram illustrating an exemplary device 11 for optimizing environmental consumption 3 used by a production cycle 21 of a processing line 10 and/or industrial site 1.
Figure 2a shows a block diagram illustrating an exemplary device 11 comprising a lookup device 1121.
Figure 2b shows a block diagram illustrating an exemplary device 11 comprising a machine learning 1122.
Figure 3a shows a diagram illustrating schematically an exemplary table of input materials 103.
Figure 3b shows a diagram illustrating schematically an exemplary table of financial investment parameters 1352.
Figure 3c shows a diagram illustrating schematically an exemplary table of product volume parameters 1351.
Figure 3d shows a chart illustrating schematically an exemplary comparison of a CO2 emission of one or more second products 222 manufactured or processed by a re-configured production cycle 22 with a one or more third products 231.

### Detailed Description of the Invention

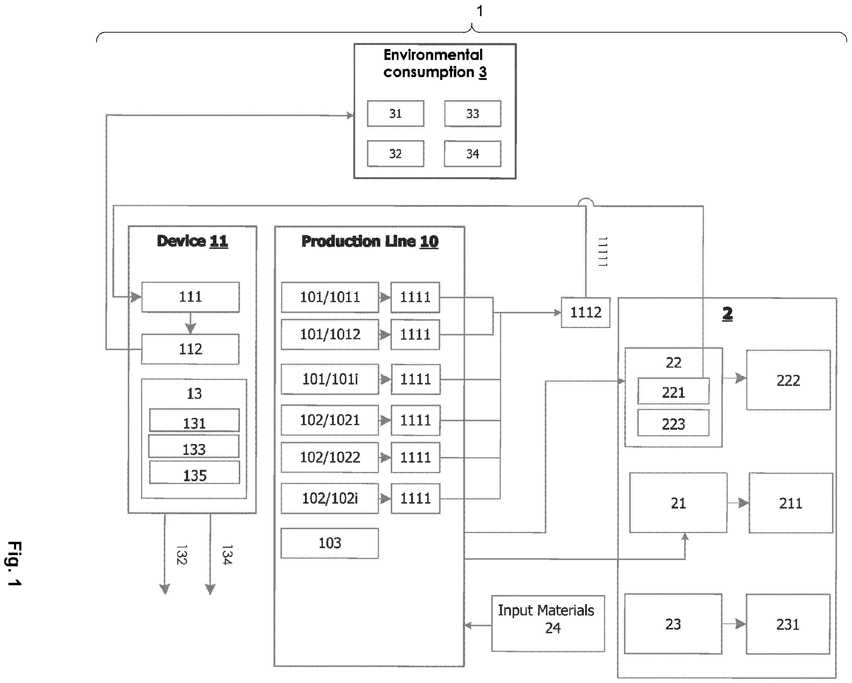

Figure 1 illustrates, schematically, an architecture for a possible implementation of the inventive method and system, in particular for the claimed inventive device 11 for optimizing environmental consumption 3 used by a production cycle 21 of a processing line 10 and/or an industrial site 1 for processing or manufacturing one or more products 211 by said production cycle 21. The environmental consumption 3 can capture not only the manufacturing or processing process line 10 at a specific site, but can comprises and cover the complete production chain of the one or more products 211, for the generation of value settings for optimizing the environmental consumption management of the processing line 10 and/or industrial site 1, input material 103 processing, transport, industrial processing, or manufacturing, up to the delivery transport, thus covering all aspects of the production of an industrial product including transport and packing etc. In the variant of such a more holistic measurement, the term industrial site 1 is used in a wider definition comprising all technical is used in a wider definition comprising all technical means for processing and providing an industrial production the mining or cultivation of input material 103 to the one or more products 211. However, the measurement of the environmental consumption 3 can also be limited to a specific industrial site 1, an industrial plant, production line 10, or production cycle 2, 21, 22, 23 providing only a partial step in the overall industrial production chain of the product 211. The industrial site 1 can e.g. comprise at least one industrial plant and/or processing line 10 and/or one or more structural elements 102 [1021..102i] and/or the one or more processing units 101 [1011..101i]. According to the claimed invention the processing line 10 comprising the one or more processing units 101 [1011..101i] interlinked to provide the production cycle 21, and the device 11 comprising an input section 111 with measuring devices and sensors 1111 capturing measuring parameters 11111 at the processing units 101 [1011..101i], data transmission lines/networks 1112 to communicate the measured parameters 11111 from the measuring devices and sensors 1111 to the device 11 and the device 11 comprising a determining module 112 configured to measure environmental consumption parameter values 31 of the production cycle 21 via the input section 111, the environmental consumption parameter values 31 indicating the environmental consumption 3 used by the production cycle 21 for manufacturing or processing the product 211.

The environmental consumption parameter values 31 can e.g. be generated by the determining module 112 or by a dedicated environmental quantification module. The term "module," as used herein, refers to logic embodied in hardware or firmware, or to a collection of software instructions, written in a programming language. In one embodiment, the program language may be Java, C, or assembly. One or more software instructions in the modules may be embedded in firmware, such as in an EPROM. The modules described herein may be implemented as either software and/or hardware modules and may be stored in any type of non-transitory computer-readable storage medium or other storage device. Some non limiting examples of non-transitory computer-readable storage medium include CDs, DVDs, flash memory, and hard disk drives.

It is important to note that the optimization of environmental consumption 3 of the process line 10 and the measurement of the environmental consumption 3 of the respective industrial site 1 and/or of a product 211 manufactured or processed by the production cycle21 of the production line 10, can be decoupled technical aspects. For example, if there is mitigating procurement of green energy in the overall energy consumption, CO2 reduction can become decoupled from energy reduction. Thus, for the expert system aspects of the present invention, the measured environmental consumption 3 and optimizing of the environmental consumption 3 do not need to have a direct relationship.

The device 11 can e.g. comprise at least one programmable logic controller (PLC) or programmable controller associated with the industrial site 1 as automation controllers adapted for the control of the production cycle 21 or the production lines 10 manufacturing or processing the products 211 at the industrial site 1, the PLC input and output devices (I/O) realized as in-house integral with a data processor or rack mounted as modular devices with I/O devices. The PLCs of the industrial site 1 can e.g. be connected over a data transmission network to a supervisory control and data acquisition (SCADA) system of the device 11 providing programming and process fault diagnosis language may be Java, C, or assembly. One or more software instructions in the modules may be embedded in firmware, such as in an EPROM. The modules described herein may be implemented as either software and/or hardware modules and may be stored in any type of non-transitory computer-readable storage medium or other storage device. Some non limiting examples of non-transitory computer-readable storage medium include CDs, DVDs, flash memory, and hard disk drives.

In the claimed invention, the measuring parameters 11111 comprise parameter vectors wherein the parameter values of the parameter vectors are time series of parameter values changeable over an entire predetermined operation period, and/or parameter scalars, wherein the parameter values of the parameter scalars do not change throughout the entire operation period, and constructional parameters, wherein structional parameter values represent structural characteristics of the structural elements 102 [1021..102i] of the processing line 10 and/or industrial site 1.

The processing units 101 [1011..101i] comprising a conveyor and/or a roller stand and/or a plan sifter and/or a cooling device and/or a heating device and/or a central aspiration unit and/or an extruder or/and a die casting machine, for processing one or more input materials 103. Furthermore, the parameter vectors comprising a feeding rate of the conveyor and/or a roller speed of the roller stand and/or a temperature of the cooling device and/or a moisture content of the material and/or a protein content of the input material 24 processed by the production cycle 21 and/or a speed of the central aspiration unit and/or a feeding rate for at least one of the one or more input materials 103. The parameter scalars comprising the industrial site 1 manufacturing space and/or technical specification installed processing units 101 [1011..101i] and/or base-level of energy consumption of the process units 101 [101 1..101i] and/or maximum processing capacity of each processing unit 101 [1011..101i] and/or material CO2-e intensity per unit of the input materials 103 and/or a material energy consumption intensity of the materials 24 processed by the production cycle 21 and/or an element CO2-e intensity per each structural element 102 [1021..102i]. The structural elements 102 [1021..102i] comprising an aspiration installation and/or an electrical installation and/or a water installation and/or a gas installation and/or an office space and/or an air conditioning system and/or a storing unit for the input materials 103.

According to the claimed invention the determining module 112 is further configured to capture re-configuration parameters 221 for re-configuring the production cycle 21 to a re-configured production cycle 22 via the input section 111, the re-configured production cycle 22 used for manufacturing or processing one or more second products 222, and the re-configuration parameters 221 denoting one or more processing units 101 [1011..101i] and/or one or more structural elements 102 [1021..102i] and/or one or more input materials 103 to be replaced and/or adjusted and/or added to the processing line 10 for manufacturing or processing the one or more second products 222. Furthermore the determining module 112 is configured to forecast (i) second environmental consumption parameter values 32 of the re-configured production cycle 22 for manufacturing or processing the second product 222 and (ii) re-configuration environmental consumption parameter values 33 indicating the environmental consumption 3 used for the reconfiguration of the production cycle 21 to the re-configured production cycle 22 based on the re-configuration parameter values 221. Furthermore the determining module 112 is configured to generate a time-dependent saving parameter value 131, the time-dependent saving parameter value 131 measuring the cumulated environmental-consumption given by the totaled second environmental consumption parameter values 32 used by the re-configured production cycle 22 and summed up by the totaled re-configuration environmental consumption parameter values 33, and subtracted by the environmental consumption parameter values 31 of the production cycle 21, thereby indicating the environmental savings of the re-configuration production cycle 22 for manufacturing or processing the second product 222 compared to the production cycle 21 for manufacturing or processing the product 211 over time, and the determining module 112 is configured to trigger a first control signal 132 if the time-dependent environmental-saving parameter value 131 becomes zero or negative indicating the point in time, where the environmental savings achieved by re-configuring the production cycle 21 to the re-configured production cycle 22 becomes positive.

According to the claimed invention the input section 111 is configured to capture one or more third products 231, the determining module 112 is configured to forecast third environmental consumption parameter values 34 of the production or manufacturing of the one or more third products 231, the third environmental consumption parameter values 34 indicating the environmental consumption 3 used for the production or manufacturing of the one or more third products 231. Furthermore, the determining module 112 is configured to generate a time-dependent second saving parameter value 133, the time-dependent second saving parameter value 133 measuring the cumulated environmental-consumption given by the totaled second environmental consumption parameter values 32 used by the re-configured production cycle 22 and summed up by the totaled re-configuration environmental consumption parameter values 33, and subtracted by the third environmental consumption parameter values 34 of the one or more third products 231, thereby indicating the environmental savings of the re-configuration production cycle 22 for manufacturing or processing the second product 222 compared to the one or more third products 231 over time. Furthermore, the determining module 112 is configured to trigger a second control signal 134 if the time-dependent second environmental-saving parameter value 133 becomes zero or negative indicating the point in time, where the environmental savings achieved by the re-configured production cycle 22 becomes positive.

In an embodiment variant of the invention the third product 231 is an alternative product compared to the second product 222. An "alternative product" means a product with similar characteristic(s). The second product 222 being a plant-based chicken meat alternative 222 the alternative third product 231 is natural chicken meat 231, for example. In this case the texture and protein content of the products 222, 231 is similar.

The environmental consumption parameters 31, 32, 33, 34 can denote an energy consumption parameter and/or a CO2 emission parameter and/or a water consumption parameter and/or a land consumption parameter and/or a material consumption parameter and/or a capital consumption parameter and/or a biodiversity consumption parameter. In a embodiment of the invention the energy consumption parameters denotes a natural gas consumption, measured in cubic meters (m3) or British thermal units (BTU) and/or an electricity consumption measured in kilowatt-hours (kWh) and/or fuel oil consumption measured in liters or gallons. The land consumption parameter can denote (i) a consumption rate (LCR), used to measure the rate at which land is being consumed for urban development wherein the LCR is calculated using the formula: LCR = (LN(Urb(t2)/Urb(t1)) / (y), where Urbt1 is the total urban area in the initial year, Urbt2 is the total urban area in the final year and y is the number of years between the two measurement periods, and/ or (ii) a total urbanized area measuring the entire spatial extent that meets the defined threshold of "urban" (as distinguished from "rural") and is typically measured in square kilometers (km²) and/or (iii) a built-up area, referring to the area covered by buildings and other urban structures within the urban extent and is also typically measured in square kilometers (km²) and/or (iv) an urban extent, defining the overall area considered urban, including both built-up areas and open spaces within the urban boundary and/or (v) a population density, population density (people per square kilometer) is often used in conjunction with land consumption metrics to assess the efficiency of urban land use and/or (vi) a rate of change of land consumption per person, defining the average annual rate of change of land consumption per person between two periods. It can be calculated using the formula: ΔC = Ln(C2/C1) / (t2 - 11), where C = A/P (A is the total land area, and P is the total population). The CO2 emission parameters can denote CO2 emissions from gas in kg CO2/m3 and/or CO2 emissions from fuel in kg CO2/gallon and/or a CO2 emissions from coal in kg CO2/ ton and/or CO2 emissions from electricity generation in lbs CO2/MWh 3. These parameters are commonly used in environmental impact assessments and carbon footprint calculations.

The device 11 can comprise a repository 114, the repository 114 comprising (i) a historical environmental consumption data 1141 and/or an emission repository 1142 and/or a recipe data 1143 and/or reconfiguration data, and (ii) data transmission lines/networks 1144 to transfer and handle data recorded in the repository 114 between the repository 114 and the control device 11 via the input section 111. The emission repository 1142 comprising at least one emission record 11421, wherein each emission record 11421 is related to one of the input materials 103 or to one of the products 211, 222, 231 or to one of the structural elements 102 [1021..102i] or to one of the processing units 101 [1011..101i], and each emission record 11421 denotes an energy consumption intensity and/or a CO2e intensity and/or a land use intensity and/or a water use intensity and/or a biodiversity use intensity (i) per unit of processed material or manufactured product or (ii) per financial investment for the re-configuration of the production cycle 21 and/or processing line 10 and/or the industrial site 1. Furthermore, the recipe data 1143 comprising at least one recipe 11431 for manufacturing or processing the one or more first products 211 or the one or more second product 222 or the third product 231, and the recipe 11431 denotes a recipe ID and/or one or more recipe input materials each with a weight portion for quantifying the share of the recipe material of the corresponding product 211, 222, 231.

The repository 114 can further includes an interface and/or data capturing module, a setting module, a selecting module, a determining module, a notifying module, a data processing module, a displaying module, and a verifying module. The modules may comprise computerized instructions in the form of one or more programs that are stored in the storage device and executed by the at least one processor. In one embodiment, the storage device may be an internal storage system, such as a random-access memory (RAM) for temporary storage of information, and/or a read only memory (ROM) for a permanent storage of information. In some embodiments, the storage device may also be an external storage system tern, such as an external hard disk, a storage card, or a data storage medium.

The interface receives the re-configuration parameter values 221 from the device 11 to perform the reconfiguration of the production cycle 21 to manufacture the second product 222, e.g. captured via a graphical user interface (GUI), and performs the reconfiguration of the production cycle 21. The reconfiguration may comprise, for example, the processing units 101 [1011..101i] and/or structural elements 102 [1021..102i] replaced/amended/added and/or recipe and/or configuration parameters for the process units 101 [1011..101i] and/or one or more emission records 11421 related to the processing units 101 [1011..101i] and/or structural elements 102 [1021..102i] and/or the input materials 103 defined in a selected recipe 11431. When a user captures the reconfiguration (e.g., by selecting the first recipe displayed on a screen using a mouse, a keyboard, and/or a touch screen), the device 11 can, for example, control process units 101 [1011..101i] and parameters of the process units 101 [1011.. 101i] and receives the recipe 11431 associated with the reconfiguration with the input materials 103 entered in the device 11. If the user selects the reconfiguration reference template, the interface receives a template selected by the user. Different branches can use different templates. The interface loads the input materials 103 and the parameters of the of the reference template reconfiguration, e.g. from the memory storage device to offer the user different reference selections.

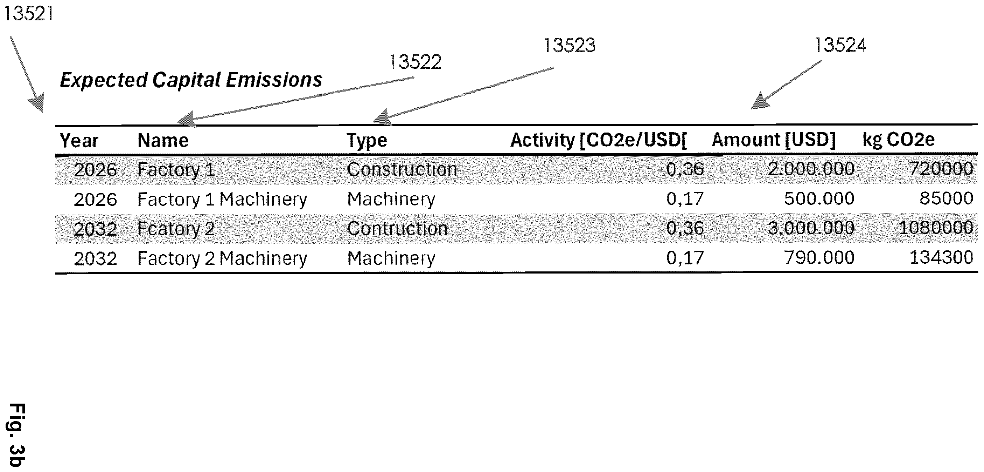

According to the claimed invention the re-configured production cycle 22 manufactures or processes the one or more second products 222 during a production cycle period 223, and the determining module 112 is further configured to capture planning parameters 135, each planning parameter 135 denoting a product volume parameter 1351 for planning a number of units of the one or more second products 222 being manufactured or processed by the re-configured production cycle 22 and/or a financial investment parameter 1352 for defining the financial investment used for the reconfiguration of the production cycle 21 to the re-configured production cycle 22. Fig 3b illustrates, schematically a table listening the financial investment parameter 1352, the financial investment parameter 1352 denotes a investment period 13512 and/or an investment name 13513 and/or an investment type 13514 and/or an investment amount 13515. For example, the selecting module of the repository 114 can e.g. select a particular investment type 13514 e.g. according to the demand of the user. The selecting module loads the corresponding emission record 11421 of the emission repository 1142. The emission record 11421 denotes the CO2 emissions intensity per investment of the investment type 13514, for example. All the investment types 13514 can e.g. displayed on the selecting modules displays on the display device according to the illustration of Fig. 3b.

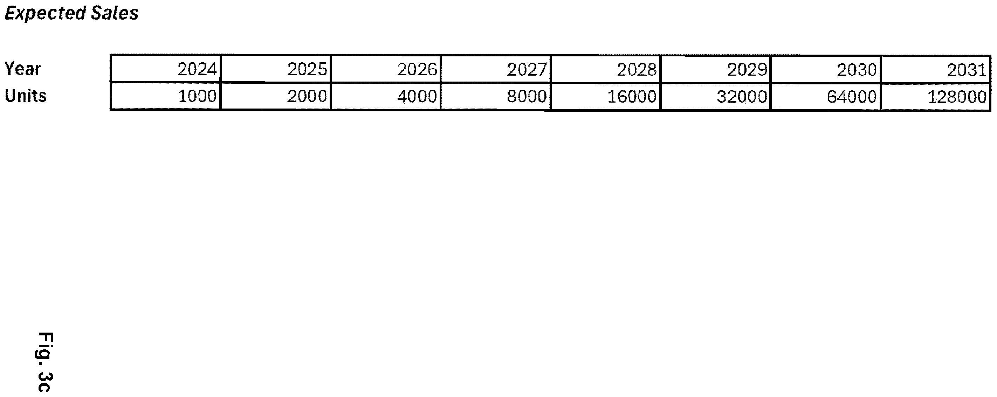

Fig 3c illustrates, schematically a table listening the entire or a part of a production cycle period 223 that can be divided into several first time intervals 2231, the product volume parameter 1351 is time-dependent and is denoting a production volume value of the manufactured or processed one or more second products 222 by the reconfigured production cycle 22 for each of the first time intervals 2231. The first time interval 2231 can be e.g. one year as illustrated in Fig 3c. The table of Fig. 3c shows for each year a corresponding product volume parameter value 1351 named as "Units" in the table of Fig. 3c.

Furthermore, the entire or part of production cycle period 223 is divided into several second time intervals 2232, and the financial investment parameter 1352 is time-dependent and is denoting an investment amount value for each of the second time intervals 2232 indicating the financial investment for re-configuring the production cycle 21 to the re-configured production cycle 22. In an embodiment of the invention the first time interval 2231 and the second time interval 2232 are equal in time/comprise a identical duration of time. Furthermore the first time interval 2231 and/or second time interval 2232 comprise a duration of one year or a period of time equal to the planning period for industrial site 1 or production line 10.

According to the invention the device 11 comprises a predictive device 113 configured (i) to retrieve from the related recipe data 1143 stored in the repository 114 for each of the one or more products 211 manufactured or produced by the production cycle21 and/or the corresponding recipe of the one or more second products 222 with the corresponding one or more recipe input materials and the corresponding weight portions, and the predictive device 102 is configured to retrieve for each retrieved recipe input material 11431 and/or for each processing unit 101 of the production cycle21 and/or the processing units 101 [1011..101i] and/or input material replaced or adjusted or added the corresponding emission record 11421.

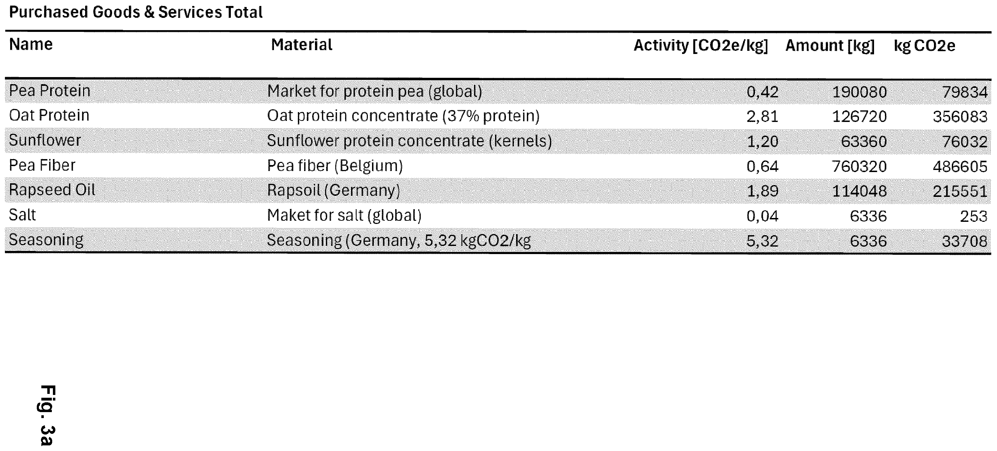

In an embodiment of the invention the selecting module of the repository 114 ca e.g. the one or more products 211 e.g. according to a demand of the user. The selecting module of the repository 114 loads the corresponding recipe(s) 11431 of the one or more products 211 from the recipe data 1143. The recipe 11431 may include a list of recipe input materials in the one or more products 211 and in relation to each recipe input material e.g. the corresponding characteristics as weight portions and/or a environmental consumption intensity. All recipes 11431 and/or recipe input materials and/or products 211, 222, 231 can be displayed by the selecting module displays on a display device according to a suitable graphical representation as illustrated in Fig 3a schematically a exemplary recipe 11431 listening the recipe input materials with a recipe input material name named as "Name", a description of the recipe input material named as "Material", the corresponding environmental consumption intensity (CO2e per kilogram e.g.) named as "Activity" and the amount of the processed recipe input material for the production cycle period 223 of the re-configured production cycle 22.

In an embodiment of the invention the predictive device 112 can comprise a lookup device 1121 for generating (i) second environmental consumption parameter values 32 and/or re-configuration environmental consumption parameter values 33, of the re-configured production cycle 22 based on the re-configuration parameter values 221 and the measuring parameter values 11111 and the lookup device 1121 comprising a lookup interface 11211 for receiving, sending and searching the emission records 11421 stored in emission repository 1142 based on one set of the re-configuration parameter values 221 and a hash module 11212 for determining for a given set of re-configuration parameter values 221 the predictive re-configuration environmental consumption intensity values and/or the predictive re-configuration CO2e intensity values of the corresponding re-configuration parameter values 221 and/or the predictive environmental consumption values and/or the predictive CO2e intensity values (22) and the predictive element reconfiguration CO2e-intensity values and/or the predictive element reconfiguration energy consumption intensity values are generated based on the investment cost for each of the re-configuration parameter values 221.

Furthermore, the predictive device 102 is configured to generate time-dependent second environmental consumption parameter values 32, the generated time-dependent second environmental consumption parameter values 32 forecasting the totaled environmental consumption 3 of the manufacturing or processing of the one or more second products 222 for each of the first time intervals 2231 based on the corresponding emission records of 11421 (i) the recipe input materials with the corresponding weight portion of the recipe 11431 of each of the one or more second products 222 and/or the processing units 101 [1011..101i] of the production cycle 21 and (ii) the processing units 101 [1011..101i] and/or input materials 103 being replaced and/or adjusted and/or added to the processing line 10 for manufacturing or processing the one or more second products 222 and (iii) the time dependent product volume parameter values 1351 of the re-configured production cycle 22.

The predictive device 102 can be configured to generate time-dependent re-configuration environmental consumption parameter values 33, the time-dependent re-configuration environmental consumption parameter values 33 forecasting the totaled environmental consumption for each second time interval 2231 used by the reconfiguration of the production cycle 21 based on the emission records 11421 of the processing units 101 [1011..101i] and/or structural elements 102 [1021..102i] being replaced and/or adjusted and/or added to the processing line 10 for manufacturing or processing the one or more second products 222 and the time dependent financial investment parameter values 1352.

Furthermore, the predictive device 102 configured to retrieve for each of the manufactured or produced one or more third products 231 the corresponding emission record 11421, and the predictive device 102 is configured to generate time-dependent third environmental consumption parameter values 34, the time-dependent third environmental consumption parameter values 34 forecasting the totaled environmental consumption 3 of the manufacturing or processing of the one or more third products 231 for each of the first time intervals 2231 based on retrieved emission records 11421 for each of the one or more third products 231 and the time-dependent product volume parameter values 1351 of the re-configurated production cycle 22. The third environmental consumption parameter values 34 can be forecasted by cumulating multiplying the environmental consumption intensity of the retrieved emission record 11421 with the corresponding product volume parameter value 1351 for each second time interval 2232.

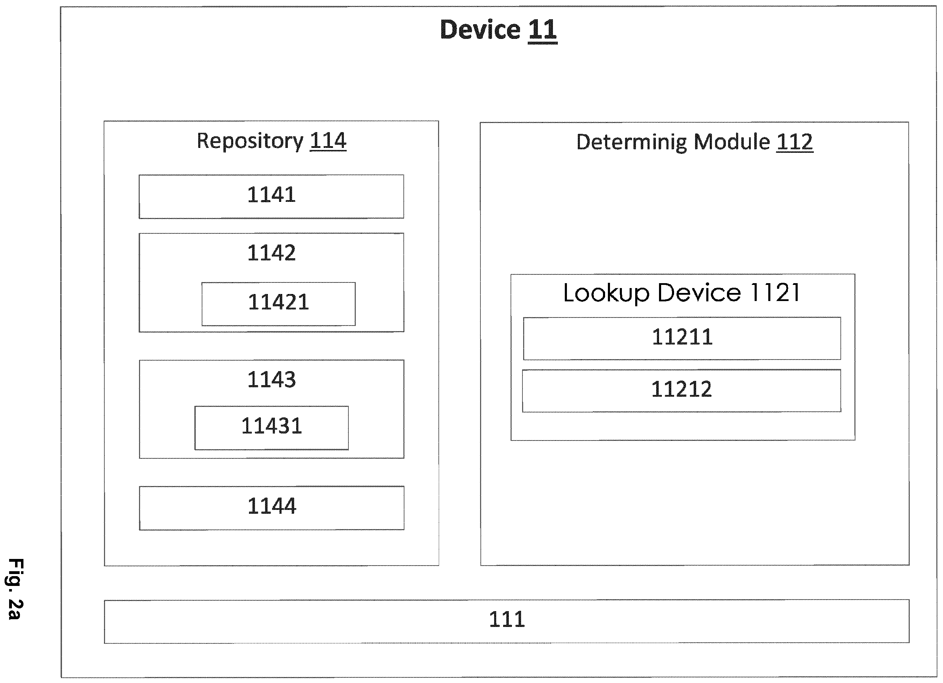

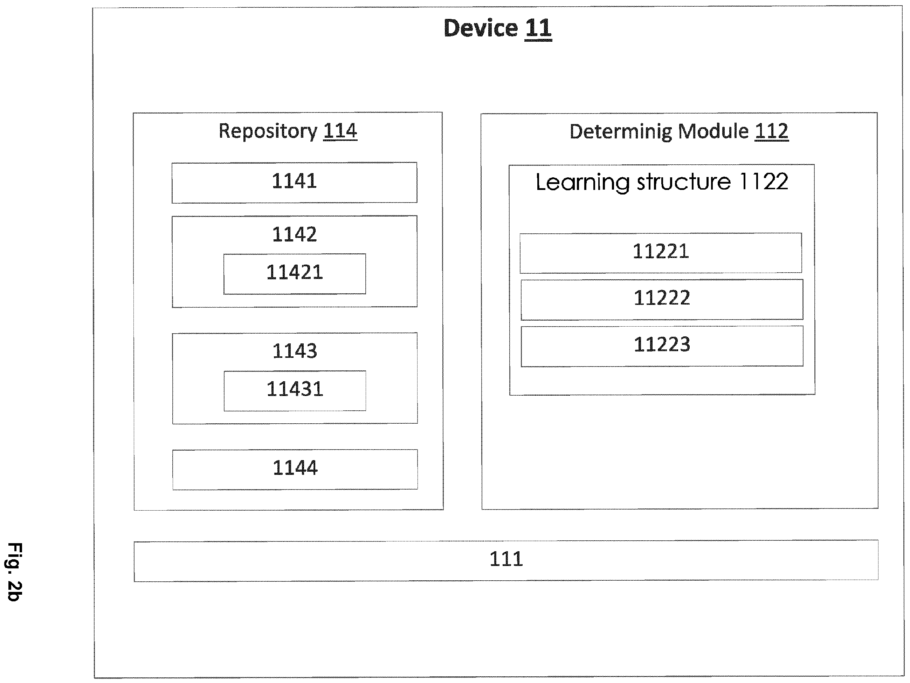

Figure 2b illustrates, schematically another embodiment of the invention the predictive device 112 comprising a machine learning structure 1122 with a machine interface 11221 for receiving the historical environmental consumption data 1141 from the repository 114 and a machine learning-based modelling engine 11222 for generating at least one digital model structure 11223 based on the historical environmental data 1141 as input data and after training for determining for a given set of re-configuration parameter values 221 of the reconfiguration of the production cycle 21 to the re-configured production cycle 22 the second environmental consumption parameters values 32 and/or environmental intensity values of the one or more second products 222 manufactured or processed by the re-configured production cycle 22.

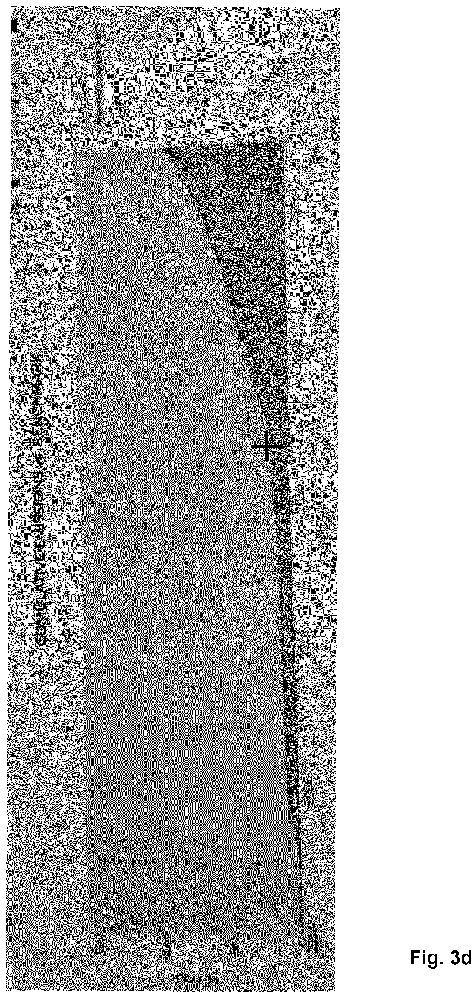

Figure 3d illustrates schematically a graphical representation as a chart indicating the forecasted second environmental consumption parameters value 32, re-configuration environmental consumption parameters values 33 and the third environmental consumption parameters values 34 created by the device 11. In a embodiment of the invention the CO2 emission values of the environmental consumption parameters values 31, 32, 33, 34 are created.

Based on the product cycle 21 and/or the generated environmental consumption parameter values 31 and/or the re-configuration environmental consumption parameter values 33, the control device 11 can e.g. provide optimized re-configuration parameter values 221 by varying re-configuration parameter values. The device 11 can e.g. provide a dynamically adapted line configuration based on the optimized improvement measures. For example, the device can evaluate by a life cycle assessment (LCA) the environmental consumption parameter by varying the processing units 101 [1011...101i] and/or structural elements 102 [1021..102i] and/or the input materials 103. The LCA comprises four steps:
(a) Goal and scope definition that defines the purpose of the study, system boundaries. It sets the foundation for the entire assessment.
(b) Assessment of the processing units 101 [1011..101i] and quantifying the input, input materials 103 and/or energy for example, and outputs, emissions and waste of the processing line 10 and/or industrial site 1.
(c) Measuring or generating the re-configuration environmental consumption parameter values 33 and/or the second environmental consumption parameter values 32.
(d) Weighting to assign relative importance to different environment consumption parameters 32, 33.

The device 11 can use a matrix-based calculations based on matrix algebra with the benefit to efficiently handle large datasets and complex relationships between processes and/or a Monte Carlo simulations generating a probability distributions for the environmental consumption parameter values 32, 33 results and/or a sensitivity analysis algorithms to identify key parameters influencing environmental consumption parameter values 32, 33 and/or the machine learning structure 1024 for data gap filling and predictive modeling in the LCA.

In the inventive method for optimizing environmental consumption 3 used by a production cycle 21 of a processing line 10 and/or a industrial site 1 for processing or manufacturing one or more products 211 by said production cycle 21, the processing line 10 comprising one or more processing units 101 [1011..101i] interlinked to provide the production cycle 21, and the device 11 comprising an input section 111 with measuring devices and sensors 1111 capturing measuring parameters 11111 at the processing units 101 [1011..101i], data transmission lines/networks 1112 to communicate the measured parameters 11111 from the measuring devices and sensors 1111 to the device 11, comprising the steps of:
a) measuring environmental consumption parameter values 31 of the production cycle 21 via the input section 111, the environmental consumption parameter values 31 indicating the environmental consumption 3 used by the production cycle 21 for manufacturing or processing the product 211,
b) capturing re-configuration parameters 221 for re-configuring the production cycle 21 to a re-configured production cycle 22 via the input section 111, the re-configured production cycle 22 used for manufacturing or processing one or more second products 222,
c) forecasting second environmental consumption parameter values 32 of the re-configured production cycle 22 for manufacturing or processing the second product 222,
d) forecasting re-configuration energy consumption parameter values 33 indicating the environmental consumption 3 used for the reconfiguration of the production cycle 21 to the re-configured production cycle 22 based on the re-configuration parameter values 221,
e) generating a time-dependent saving parameter value 131 by i measuring the cumulated environmental-consumption given by the totaled second environmental consumption parameter values 32 used by the re-configured production cycle 22, ii summing up the totaled re-configuration environmental consumption parameter values 33, and iii subtracting the environmental consumption parameter values 31 of the production cycle 21, thereby indicating the environmental savings of the re-configured production cycle 22 for manufacturing or processing the second product 222 compared to the production cycle 21 for manufacturing or processing the product 211 over time, and
f) triggering a first control signal 132 if the time-dependent saving parameter value 131 becomes zero or negative indicating the point in time, where the environmental savings achieved by re-configuring the production cycle 21 to the re-configured production cycle 22 becomes positive.

### Reference list

1 Industrial site
   10 Production line
      101 Processing units
         1011..101i
      102 Structural elements
         1021..102i
      103 Input materials
   11 Device for optimizing environmental consumption
      111 Input section
         1111 Measuring devices and Sensors
            11111 Measuring parameters
         1112 Data transmission lines/networks
      112 Determining module
         1121 Lookup device
            11211 Lookup interface
            11212 Hash module
         1122 Machine learning structure
            11221 Machine interface
            11222 Machine learning-based modelling engine
            11223 Digital model structure
      114 Repository
         1141 Historical environmental consumption data
         1142 Emission repository
            11421 Emission record
         1143 Recipe data
            11431 Recipe
         1144 Data transmission lines/networks
   13 Environmental parameters/signals
      131 Environmental-saving parameters
      132 First control signal
      133 Second environmental-saving parameters
      134 Second control signal
      135 Planning parameter
         1351 Product volume parameter
         1352 Financial investment parameter
            13521 Investment period
            13522 Investment name
            13523 Investment type
            13524 Investment amount
2 Production cycles for manufacturing a product
   21 Production cycle
      211 Products produced by the production cycle
   22 Re-configured production cycle
      221 Re-configuration parameters
      222 One or more second products
      223 Production cycle period
         2231 First time interval
         2232 Second time interval
   23 Third production cycle
      231 Third products
3 Environmental consumption
   31 Environmental consumption parameters
   32 Second environmental consumption parameters
   33 Re-configuration environmental consumption parameters
   34 Third environmental consumption parameters

## Claims

1. A device (11) for optimizing environmental consumption (3) used by a production cycle (21) of a production line (10) and/or an industrial site (1) for processing or manufacturing one or more products (211) by said production cycle (21), the production line (10) comprising one or more processing units (101) [1011..101i] interlinked to provide the production cycle (21), and the device (11) comprising an input section (111) with measuring devices and sensors (1111) capturing measuring parameters (11111) at the processing units (101) [1011..101i], data transmission lines/networks (1112) to communicate the measured parameters (11111) from the measuring devices and sensors (1111) to the device (11), **characterized,**
**in that** the device (11) comprises a determining module (112) configured to measure environmental consumption parameter values (31) of the production cycle (21) via the input section (111), the environmental consumption parameter values (31) indicating the environmental consumption (3) used by the production cycle (21) for manufacturing or processing the product (211),
**in that** the determining module (112) is further configured to capture re-configuration parameters (221) for re-configuring the production cycle (21) to a re-configured production cycle (22) via the input section (111), the re-configured production cycle (22) used for manufacturing or processing one or more second products (222), and the re-configuration parameters (221) denoting one or more processing units (101) [1011.. 101i] and/or one or more structural elements (102) [1021..102i] and/or one or more input materials (103) to be replaced and/or adjusted and/or added to the production line (10) for manufacturing or processing the one or more second products (222),
**in that** the determining module (112) is configured to forecast (i) second environmental consumption parameter values (32) of the re-configured production cycle (22) for manufacturing or processing the second product (222) and (ii) re-configuration environmental consumption parameter values (33) indicating the environmental consumption (3) used for the reconfiguration of the production cycle (21) to the re-configured production cycle (22) based on the re-configuration parameter values (221),
**in that** the determining module (112) is configured to generate a time-dependent saving parameter value (131), the time-dependent saving parameter value (131) measuring the cumulated environmental-consumption given by the totaled second environmental consumption parameter values (32) used by the re-configured production cycle (22) and summed up by the totaled re-configuration environmental consumption parameter values (33), and subtracted by the environmental consumption parameter values (31) of the production cycle (21), thereby indicating the environmental savings of the re-configuration production cycle (22) for manufacturing or processing the second product (222) compared to the production cycle (21) for manufacturing or processing the product (211) over time, and
**in that** the determining module (112) is configured to trigger a first control signal (132) if the time-dependent environmental-saving parameter value (131) becomes zero or negative indicating the point in time, where the environmental savings achieved by re-configuring the production cycle (21) to the re-configured production cycle (22) becomes positive.

2. A device (11) for optimizing environmental consumption (3) used by a production cycle (21) of a production line (10) for processing or manufacturing one or more products (211) by said production cycle (21), according to claim 1, **characterized, in that** the input section (111) is configured to capture one or more third products (231),
**in that** the determining module (112) is configured to forecast third environmental consumption parameter values (34) of the production or manufacturing of the one or more third products (231), the third environmental consumption parameter values (34) indicating the environmental consumption (3) used for the production or manufacturing of the one or more third products (231),
**in that** the determining module (112) is configured to generate a time-dependent second saving parameter value (133), the time-dependent second saving parameter value (133) measuring the cumulated environmental-consumption given by the totaled second environmental consumption parameter values (32) used by the re-configured production cycle (22) and summed up by the totaled re-configuration environmental consumption parameter values (33), and subtracted by the third environmental consumption parameter values (34) of the one or more third products (231), thereby indicating the environmental savings of the re-configuration production cycle (22) for manufacturing or processing the second product (222) compared to the one or more third products (231) over time, and
**in that** the determining module (112) is configured to trigger a second control signal (134) if the time-dependent second environmental-saving parameter value (133) becomes zero or negative indicating the point in time, where the environmental savings achieved by the re-configured production cycle (22) becomes positive.

3. A device (11) for optimizing environmental consumption (3) used by a production cycle (21) of a production line (10) for processing or manufacturing one or more products (211) by said production cycle (21), according to claims 1 to 2, **characterized, in that** the environmental consumption parameters (3, 31, 32, 33, 34) denoting an energy consumption parameter and/or a CO2 emission parameter and/or a water consumption parameter and/or a land consumption parameter and/or a material consumption parameter and/or a capital consumption parameter and/or a biodiversity consumption parameter.

4. A device (11) for optimizing environmental consumption (3) used by a production cycle (21) of a production line (10) for processing or manufacturing one or more products (211) by said production cycle (21), according to claims 1 to 3, **characterized, in that** the device (11) comprises a repository (114), the repository (114) comprising a historical environmental consumption data (1141) and/or an emission repository (1142) and/or a recipe data (1143) and data transmission lines/networks (1144) to transfer and handle data recorded in the repository (114) between the repository (114) and the control device (11) via the input section (111).

5. A device (11) for optimizing environmental consumption (3) used by a production cycle (21) of a production line (10) for processing or manufacturing one or more products (211) by said production cycle (21), according to claim 4, **characterized, in that** in the emission repository (1142) comprising at least one emission record (11421), wherein each emission record (11421) is related to one of the input materials (103) or to one of the products (211, 222, 231) or to one of the structural elements (102) [1021..102i] or to one of the processing units (101) [1011..101i], and
**in that** each emission record (11421) denotes an energy consumption intensity and/or a CO2e intensity and/or a land use intensity and/or a water use intensity and/or a biodiversity use intensity (i) per unit of processed material or manufactured product or (ii) per financial investment for the re-configuration of the production cycle (21) and/or production line (10) and/or the industrial site (1).

6. A device (11) for optimizing environmental consumption (3) used by a production cycle (21) of a production line (10) for processing or manufacturing one or more products (211) by said production cycle (21), according to claims 4 to 5, **characterized, in that** in the recipe data (1143) comprising at least one recipe (11431) for manufacturing or processing the one or more first products (211) or the one or more second product (222) or the third product (231), and
**in that** the recipe (11431) denotes a recipe ID and/or one or more recipe input materials each with a weight portion for quantifying the share of the recipe material of the corresponding product (211, 222, 231).

7. A device (11) for optimizing environmental consumption (3) used by a production cycle (21) of a production line (10) for processing or manufacturing one or more products (211) by said production cycle (21), according to claims 1 to 6 **characterized, in that** the re-configured production cycle (22) manufactures or processes the one or more second products (222) during a production cycle period (223), and
**in that** the determining module (112) is further configured to capture planning parameters (135), each planning parameter (135) denoting a product volume parameter (1351) for planning a number of units of the one or more second products (222) being manufactured or processed by the re-configured production cycle (22) and/or a financial investment parameter (1352) for defining the financial investment used for the reconfiguration of the production cycle (21) to the re-configured production cycle (22).

8. A device (11) for optimizing environmental consumption (3) used by a production cycle (21) of a production line (10) for processing or manufacturing one or more products (211) by said production cycle (21), according to claim 7 **characterized, in that** the entire or a part of a production cycle period (223) is divided into several first time intervals (2231),
the product volume parameter (1351) is time-dependent and is denoting a production volume value of the manufactured or processed one or more second products (222) by the reconfigured production cycle (22) for each of the first time intervals (2231).

9. A device (11) for optimizing environmental consumption (3) used by a production cycle (21) of a production line (10) for processing or manufacturing one or more products (211) by said production cycle (21), according to claims 7 to 8 **characterized, in that** the entire or part of production cycle period (223) is divided into several second time intervals (2232), and
**In that** the financial investment parameter (1352) is time-dependent and is denoting an investment amount value for each of the second time intervals (2232) indicating the financial investment for re-configuring the production cycle (21) to the re-configured production cycle (22).

10. A device (11) for optimizing environmental consumption (3) used by a production cycle (21) of a production line (10) for processing or manufacturing one or more products (211) by said production cycle (21), according to claim 9 **characterized, in that** the first time interval (2231) and the second time interval (2232) comprise a identical duration of time.

11. A device (11) for optimizing environmental consumption (3) used by a production cycle (21) of a production line (10) for processing or manufacturing one or more products (211) by said production cycle (21), according to claim 5, **characterized, in that** the device (11) comprises a predictive device (113) configured (i) to retrieve from the related recipe data (1143) stored in the repository (114) for each of the one or more products (211) manufactured or produced by the production cycle(21) and/or the corresponding recipe of the one or more second products (222) with the corresponding one or more recipe input materials and the corresponding weight portions, and
**in that** the predictive device (102) is configured to retrieve for each retrieved recipe input material (11431) and/or for each processing unit (101) of the production cycle(21) and/or the processing units and/or input material replaced or adjusted or added the corresponding emission record (11421),

12. A device (11) for optimizing environmental consumption (3) used by a production cycle (21) of a production line (10) for processing or manufacturing one or more products (211) by said production cycle (21), according to claim 8, **characterized, in that** the predictive device (102) is configured to generate time-dependent second environmental consumption parameter values (32), the generated time-dependent second environmental consumption parameter values (32) forecasting the totaled environmental consumption (3) of the manufacturing or processing of the one or more second products (231) for each of the first time intervals (2231 based on the corresponding emission records (11421) of (i) the recipe input materials with the corresponding weight portion of the recipe (11431) of each of the one or more second products (222) and/or the processing units (101) of the production cycle (21) and (ii) the processing units (101) and/or input materials (103) being replaced and/or adjusted and/or added to the production line (10) for manufacturing or processing the one or more second products (222) and (iii) the time dependent product volume parameter values (1351) of the reconfigured production cycle (22).

13. A device (11) for optimizing environmental consumption (3) used by a production cycle (21) of a production line (10) for processing or manufacturing one or more products (211) by said production cycle (21), according to claim 9, **characterized, in that** the predictive device (102) is configured to generate time-dependent re-configuration environmental consumption parameter values (33), the time-dependent re-configuration environmental consumption parameter values (33) forecasting the totaled environmental consumption for each second time interval (2231) used by the reconfiguration of the production cycle (21) based on the emission records (11421) of the processing units (101) and/or structural elements (102) being replaced and/or adjusted and/or added to the production line (10) for manufacturing or processing the one or more second products (222) and the time dependent financial investment parameter values (1352).

14. A device (11) for optimizing environmental consumption (3) used by a production cycle (21) of a production line (10) for processing or manufacturing one or more products (211) by said production cycle (21), according to claim 12, **characterized, in that** the predictive device (102) configured to retrieve for each of the manufactured or produced one or more third products (231) the corresponding emission record (11421), and
**in that** the predictive device (102) is configured to generate time-dependent third environmental consumption parameter values (34), the time-dependent third environmental consumption parameter values (34) forecasting the totaled environmental consumption (3) of the manufacturing or processing of the one or more third products (231) for each of the first time intervals (2231) based on retrieved emission records (11421) for each of the one or more third products (231) and the time-dependent product volume parameter values (1351) of the re-configurated production cycle (22).

15. A Method for optimizing environmental consumption (3) used by a production cycle (21) of a production line (10) and/or a industrial site (1) for processing or manufacturing one or more products (211) by said production cycle (21), the production line (10) comprising one or more processing units (101) interlinked to provide the production cycle (21), and the device (11) comprising an input section (111) with measuring devices and sensors (1111) capturing measuring parameters (11111) at the processing units (101), data transmission lines/networks (1112) to communicate the measured parameters (11111) from the measuring devices and sensors (1111) to the device (11), **characterized,**
**in** measuring environmental consumption parameter values (31) of the production cycle (21) via the input section (111), the environmental consumption parameter values (31) indicating the environmental consumption (3) used by the production cycle (21) for manufacturing or processing the product (211),
in capturing re-configuration parameters (221) for re-configuring the production cycle (21) to a re-configured production cycle (22) via the input section (101), the re-configured production cycle (22) used for manufacturing or processing one or more second products (222),
in forecasting second environmental consumption parameter values (32) of the re-configured production cycle (22) for manufacturing or processing the second product (222),
in forecasting re-configuration energy consumption parameter values (33) indicating the environmental consumption (3) used for the reconfiguration of the production cycle (21) to the re-configured production cycle (22) based on the re-configuration parameter values (221),
in generating a time-dependent saving parameter value (131) by (i) measuring the cumulated environmental-consumption given by the totaled second environmental consumption parameter values (32) used by the re-configured production cycle (22), (ii) summing up the totaled re-configuration environmental consumption parameter values (33), and (iii) subtracting the environmental consumption parameter values (31) of the production cycle (21), thereby indicating the environmental savings of the re-configuration production cycle (22) for manufacturing or processing the second product (222) compared to the production cycle (21) for manufacturing or processing the product (211) over time, and
in triggering a first control signal (132) if the time-dependent saving parameter value (131) becomes zero or negative indicating the point in time, where the environmental savings achieved by re-configuring the production cycle (21) to the re-configured production cycle (22) becomes positive.
